# EUROPEAN PATENT SPECIFICATION

(11) **EP 4 079 569 B1**
(45) Date of publication and mention of the grant of the patent: **25.10.2023**
(21) Application number: 21169179.5
(22) Date of filing: 19.04.2021
(51) Int. Cl.: B60N 2/62, B60N 2/28, B60N 2/30, B60N 2/02

(54) **SEAT ASSEMBLY, A SEAT EXTENSION STRUCTURE AND THE USE OF SUCH SEAT ASSEMBLY IN A VEHICLE SEAT**
SITZVERLÄNGERUNGSSTRUKTUR UND VERWENDUNG EINER SOLCHEN SITZBAUGRUPPE IN EINEM FAHRZEUGSITZ
ASSEMBLAGE DE SIÈGE, STRUCTURE D'EXTENSION DE SIÈGE ET UTILISATION D'UN TEL ENSEMBLE DE SIÈGE DANS UN SIÈGE DE VÉHICULE

(43) Date of publication of application: 26.10.2022
(73) Proprietor: Autoliv Development AB, 447 83 Vårgårda (SE)
(72) Inventor: RYDSMO, Erik, 447 83 Vårgårda (SE); JORLOV, Sofia, 447 83 Vårgårda (SE)
(74) Representative: AWA Sweden AB

(56) References cited:
- WO-A1-2014/115106
- WO-A1-2015/113633
- WO-A1-2019/002927
- DE-A1-102010 046 853
- DE-U1-202006 001 969

## Description

### Technical field

The present invention refers to a seat assembly configured to be integrated into a vehicle seat, a seat extension structure and the use of such seat assembly in a vehicle seat.

### Technical background

Today, many vehicles are designed to comprise at least one child seat that is integrated into the vehicle seating system. Such an integrated child seat is designed as an integral part of a vehicle seat for the purpose of seating a child to allow a correct positioning of the vehicle seat belt over the body. This may be made by making the vehicle seat adjustable in height. There is however also a need for the provision of a solution that allows for an easy adjustment of the seat length to adjust the seat to the occupant's length and/or to provide a support surface with an increased depth where necessary. One aim is that a child should be able to sit in a comfortable upright position and bend its legs around the front edge. Not only is the length of the seating surface a problem when it comes to children versus adults, but also men versus women since the average length of the male body is larger than the average length of the female body.

DE 10 2010 046853 refers to a passenger seating system with a seat being adjustable between two different positions.

WO2019/002927 A1 refers to a car seat that has an adjustable depth.

### Summary

It is an object of the present invention to provide an extendable seat for a vehicle to better allow adaption of the seat length to the intended occupant, no matter if this is a child or an adult.

Yet another aspect is to provide an extendable seat for a vehicle that allows the seat length to be adapted to the overall length of the occupant no matter age, but rather leg length.

These and other objects that will be apparent from the following summary and description are achieved by a seat assembly according to the appended claims.

According to the present invention, there is provided a seat assembly with the features according to claim 1.

Thus, a seat assembly is provided which allows a dual function of both allowing it to be adjusted in height and in length. Thereby the seat assembly allows the seat portion to be adjusted in height to allow the seat belt to properly fit a child. Also, the seat assembly allows the seat portion to be adjusted in length to thereby better fit the overall length of an occupant, no matter if it is a child or an adult. Also, it allows an adjustment to better fit the thighs of the occupant. Thus, the seat assembly allows for an improved safety in terms of correct fitting of safety belt, but also an improved seating comfort.

In the context of the invention the term "*size* of *an occupant*" is to be understood as both the overall length of the body but also the length of the thighs.

The seat assembly comprises a common operating arrangement configured to selectively allow operation of the linkage structure and the seat extension structure respectively. Thus, one common operating arrangement is provided which allows both height and length adjustments. This allows a seating design with large continuous exterior surfaces which facilitates seating manufacturing.

The common operating arrangement may in one embodiment comprise a handle and an actuator configured to actuate the linear movement of the seat portion between the retracted and extended position, and to actuate the seat portion to be movable between the first elevation and the second elevation, and wherein the actuator is configured to be selectively operated by pivoting and pulling the handle or by pushing the handle.

Thus, although the dual function of the operating arrangement which allows both hight adjustment and length adjustment, only one single handle is required. This allows a seating design with large continuous exterior surfaces which facilitates seating manufacturing.

The common operating arrangement may in another embodiment comprise a handle and an actuator configured to actuate the linear movement of the seat portion between the retracted and extended position, and to actuate the seat portion to be movable between the first elevation and the second elevation, and wherein the actuator is configured to be selectively operated by pulling the handle or by pushing the handle.

Thus, although the dual function of the operating arrangement which allows both hight adjustment and length adjustment, only one single handle is required. This allows a seating design with large continuous exterior surfaces which facilitates seating manufacturing.

The seat extension structure may comprise a base plate and an extender plate, the extender plate being linearly displaceable in view of the base plate to thereby move the seat portion between the retracted position and the extended position.

The seat assembly may further comprise a locking mechanism for holding the extender plate in said extended position, said locking mechanism comprising a locking arm being pivotably supported and wherein the locking arm is configured to pivot between a locking position and a released position, in which locking position the extender plate is locked in view of the base plate, and in which released position the extender plate is slidable in view of the base plate.

The locking arm may comprise an actuator portion, and the actuator may be configured to operate the actuator portion of the locking arm by pivoting the handle to thereby pivot the locking arm between the locked position and the released position.

The locking arm may be biased by a biasing member towards its locked position. By a biasing towards the locked position, the locking arm will have a locked default position. This may be seen as a safety measure to avoid that the seat moves unintentionally.

The locking arm may be is supported by the extender plate.

The locking arm may comprise a projection configured to selectively engage a locking portion supported by the base plate. The locking portion may be provided with a rack which as such comprises a plurality of teeth arranged one after the other. In an alternative embodiment, the locking portion may be provided by a plurality or recesses or protrusions. No matter form, each tooth, recess, or protrusion represents a possible fixed position for the extendable seat.

The seat assembly may further comprise a guiding arrangement, said guiding arrangement comprising at least one male guiding member and at least one female guiding member configured to slidingly receive the male guiding member. The female guiding member may be supported by base plate and the male guiding member may be supported by the extender plate. Alternatively, the female guiding member may be supported by extender plate and the male guiding member may be supported by the base plate.

According to another aspect, not part of the invention, a seat extension structure to be used in a seat assembly is provided. The seat extension structure comprises: a base plate and an extender plate, the extender plate being linearly displaceable in view of the base plate between a retracted position in which a vehicle seat cushion to be arranged to the extender plate is adapted for an occupant of a first size, and an extended position in which the vehicle seat cushion is adapted for an occupant of a second size, the first size being smaller than the second size, and wherein the base plate is configured to be fixedly supported by an upper support member of a linkage structure of the seat assembly.

The seat extension structure as such and its advantages has been thoroughly discussed above and these are equally applicable to a seat extension structure as such. The seat extension structure may be provided as a stand-alone module to be mounted to a linkage structure.

According to yet another aspect, the invention refers to the use of the seat assembly with the above described features in a vehicle seat. The vehicle seat may be used in any type of vehicles, not only cars and buses, but also other types of vehicles such as planes, trains and bicycle carts.

Further objects and advantages of the present invention will be obvious to a person skilled in the art reading the detailed description given below describing different embodiments.

### Brief description of the drawings

The invention will be described in detail with reference to the schematic drawings.
Figs. 1A-1D disclose one embodiment of a vehicle seat with a seat assembly being adjustable by elevation and extension.
Fig. 2 discloses a perspective view of the seat assembly in an elevated and retracted position.
Fig. 3 discloses a perspective view of the linkage structure which forms part of the seat assembly.
Fig. 4 discloses an exploded view of the seat assembly which allows the extension.
Fig. 5 discloses a schematic overview of the locking arrangement.
Fig. 6A is a schematic cross-section of the seat assembly in a retracted position.
Fig. 6B is a schematic cross-section of the seat assembly in a retracted position but being ready for extension into the extended position.
Fig. 6C is a schematic cross-section of the seat assembly during extension into the extended position.
Fig. 6D is a schematic cross-section of the seat assembly in it extended position.
Fig. 7A is a first schematic perspective view of the operation of the linkage structure by means of the operation arrangement.
Fig. 7B is a second schematic perspective view of the operation of the linkage structure by means of the operation arrangement.

### Detailed description

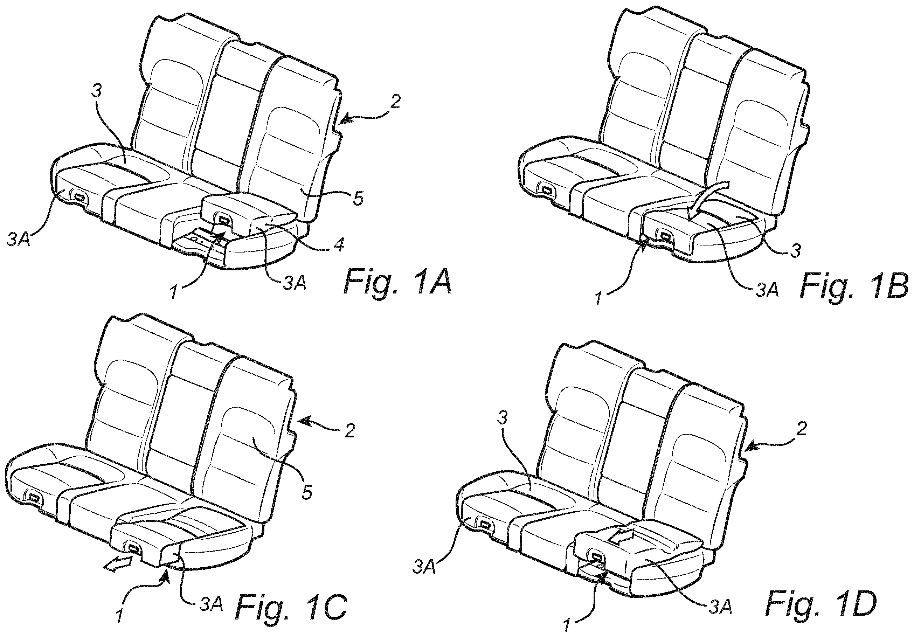

Now turning to Figs. 1A-1D, a seat assembly 1 according to one embodiment of the present disclosure is illustrated. The seat assembly 1 is integrated into a vehicle seat 2 and forms together with a seat cushion member 3A, which is mounted on the seat assembly 1, an integrated adjustable seat 4. The vehicle seat 2, which is associated with a conventional safety belt (not shown), is adjustable by elevation and extension. The seat assembly 1 may be elevated from a default position, see left-hand side of Fig.1A in which the seat cushion member 3A is flush with remaining parts of the vehicle seat cushion 3, into an elevated position see right-hand side of Fig. 1A. The elevated position allows a child to be positioned at the right height for the safety belt to work properly. The seat assembly 1 may be returned to its first, default position, see Fig. 1B, where the seat cushion member 3A anew is in flush with remaining parts of the vehicle seat cushion 3.

The seat assembly 1 may also be extended outwards in a substantially horizontal direction, see Fig 1C, from the default first position, see left-hand side of Fig. 1C into a second position in which the seat cushion member 3A is extended in view of a back portion 5 of the vehicle seat 2. By such extension, the vehicle seat 2 may be adapted to the overall length of an occupant but also to the length of the thighs of the occupant. Thus, the depth of the vehicle seat 2 may be adjusted to fit the length of the occupant, no matter if it's a child or an adult.

Further, the seat assembly 1 may be extended outwards in a substantially horizontal direction and also elevated, see Fig 1D, from the default first position, see left-hand side of Fig. 1D, into a second position in which the seat cushion member 3A is extended and elevated in view of the vehicle seat cushion 3 of the vehicle seat 2.

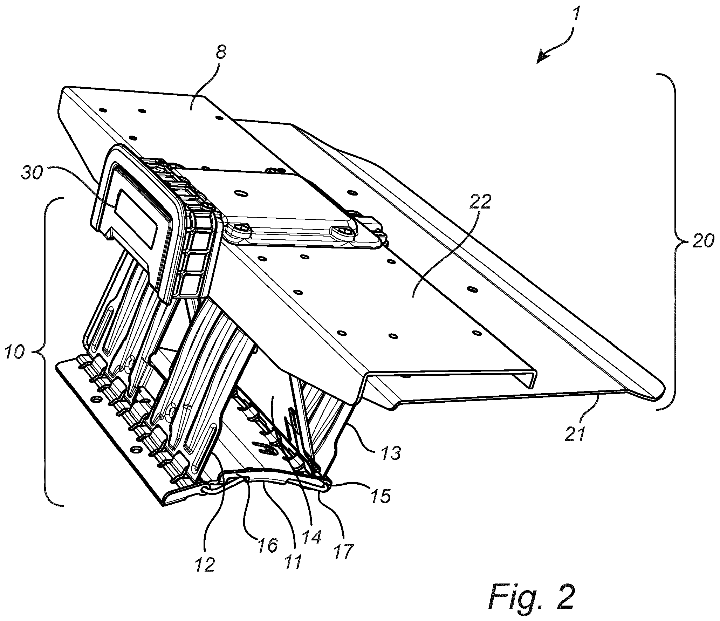

Now turning to Fig. 2, a perspective view of the seat assembly 1 according to one embodiment of the invention is disclosed. The seat assembly 1 is disclosed in an elevated and retracted position. The seat assembly 1 comprises a seat portion 8 which is configured to support a seat cushion member of the type disclosed in Fig. 1.

Throughout the following description, the terms front and rear will be used. Unless nothing else is given, the term "*front*" is to be understood as the end facing the hollow of the knee of a sitting passenger, and the term "*rear*" is to be understood as the end facing the back portion of the vehicle seat.

The seat assembly 1 comprises a linkage structure 10 which forms a first sub-structure which allows the elevation and thus the height adjustment of the seat assembly 1. The seat assembly 1 further comprises an extension structure 20 which allows the extension, and thus the length adjustment of the seat assembly 1. The present invention is mainly targeting the extension structure 20, whereby the linkage structure 10 will be very briefly disclosed and discussed. The seat assembly 1 further comprises a common operating arrangement 30 which is configured to selectively allow operation of the linkage structure 10 and the seat extension structure 20 respectively.

It is to be stressed that the extension structure 20 may be used as a stand-alone structure in the seat assembly 1, i.e. without the linkage structure 10 which as such allows the elevation.

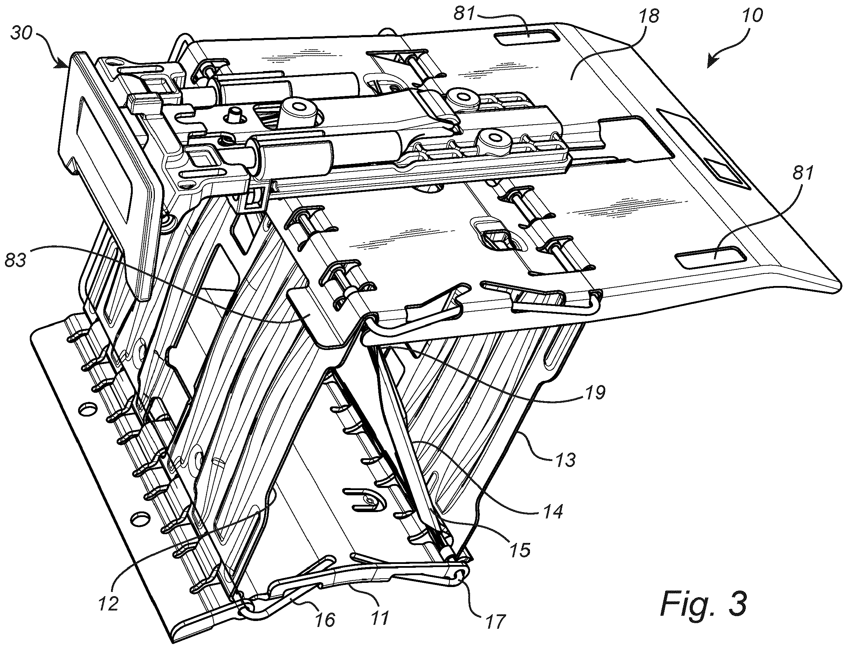

Now referring to Figs 2 and 3 the linkage structure 10 will be described. The linkage structure 10 comprises an upper support member 18 to which a base plate 21 of the extension structure 20 will be attached. The base plate 21 and the extension structure 20 will be discussed below.

The linkage structure 10 further comprises a base section 11, a first section 12, a second section 13 and a support arm 14. The first and the second sections 12, 13 are pivotable hinged in their respective opposing ends to the upper support member 18 and to the base section 11. Further, a lower end 15 of the support arm 14 is pivotably hinged to the base section 11. An upper free end 19 of the support arm 14 is configured to diagonally abut an upper end of the first section 12 to thereby maintain the linkage structure 10 in an elevated position.

The linkage structure 10 may accordingly be seen as a foldable thin-walled frame which can be erected from a non-disclosed substantially flat configuration into a quadrangular configuration having an elevated upper support member 18. The linkage structure 10 is maintained in its erected position by the support arm 14 which in the erected position extends in the diagonal direction. To further maintain the erected form and the elevated position of the upper support member 18, the first section 12 may be biased by a first elastic member 16 towards the elevated position. Further, the pivotable support arm 14 may be biased by a second elastic member 17 towards an abutment between the upper free end 19 of the support arm 14 and an upper end of the first section 12.

When used in a vehicle seat 2, the substantially flat configuration means that the seat cushion member 3A is flush with remaining parts of the vehicle seat cushion 3 as is disclosed in the left-hand side of Fig.1A. Correspondingly, the elevated position means that the seat cushion member 3A is elevated as is disclosed in the right-hand side of Fig. 1A.

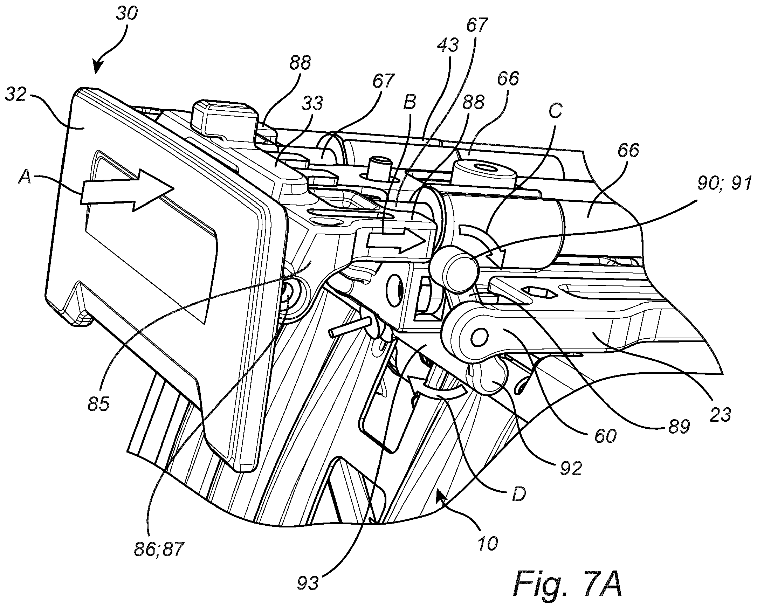

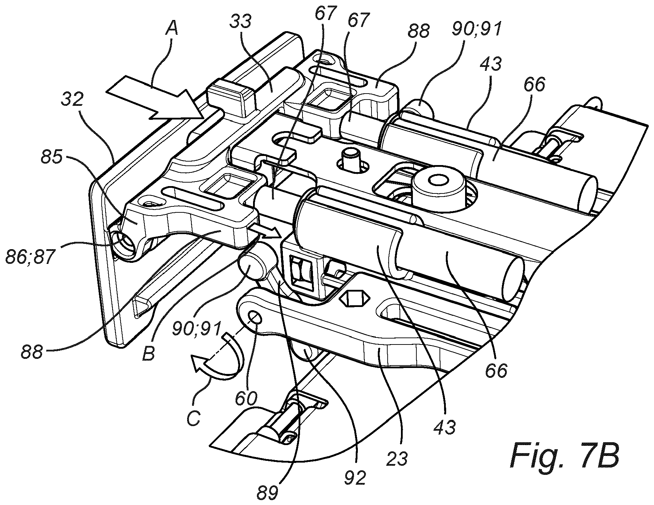

The linkage structure 10 may be operable by the operating arrangement 30 comprising a handle 32 as will be described below with reference to Figs 7A and 7B. By pushing the handle 32, the linkage structure 10 may be configured to be erected into its elevated position.

Now turning to the extension structure 20 that allows the extension of the seat assembly 1. As given above, the extension structure 20 may be supported by the linkage structure 10 via the upper support member 18 of the linkage structure 10. It is stressed anew that the extension structure 20 may be used as a stand-alone structure in the seat assembly 1, i.e. without the linkage structure 10 which as such allows the elevation.

The extension structure 20 comprises the base plate 21 and an extender plate 22. The extender plate 22 is linearly displaceable in view of the base plate 21 between a retracted position, see Fig. 2 and left-hand part of Fig. 1C, in which the vehicle seat cushion 3A to be arranged to the extender plate 22 is adapted for an occupant of a first size, and an extended position, see right-hand side in Fig. 1C, in which the vehicle seat cushion 3A is adapted for an occupant of a second size which is larger than the first size.

As is best seen in Figs 2-4, the base plate 21 may be fixedly supported by the upper support member 18 of the linkage structure 10. In the disclosed embodiment, this is made by arranging bolts (not shown) which are configured to extend through holes 81 in the upper support member 18 of the linkage structure 10 and holes 82 in the base plate 21. Lips 83 in the front end of the upper support member 18 are configured to extend through corresponding slots 84 in a front wall portion 41 of the base plate 21.

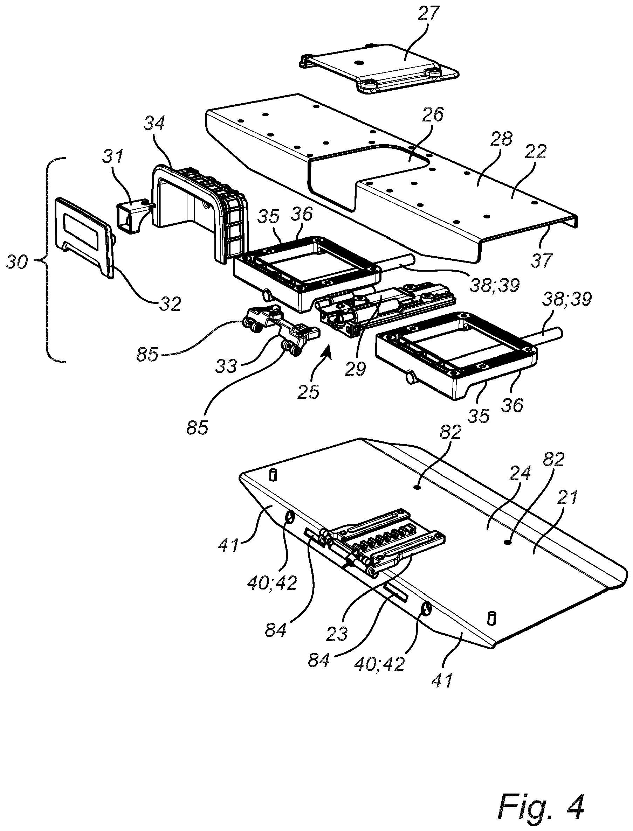

Now turning to Fig. 4 an exploded view of the extension structure 20 of the seat assembly 1 is disclosed. The extension structure 20 will from now on be described as a stand-alone structure of a seat assembly 1.

The structure comprises the base plate 21 and the extender plate 22. The extender plate 22 is configured to be linearly and slidably displaceable in view of the base plate 21 and also to be locked in two or more extended positions in view of the base plate 21. The base plate 21 and the extender plate 22 respectively comprises a rear end configured to face the back of a vehicle seat 2 and a front end which is configured to face the hollow of a knee of a passenger.

The locking of the extender plate 22 in view of the base plate 21 is provided for by a locking mechanism which is configured to be arranged in a position between the base plate 21 and the extender plate 22. The locking mechanism comprises a locking plate 23 which is configured to be supported by a top wall 24 of the base plate 21, and a locking arm arrangement 25 which is configured to be supported by the extender plate 22.

The locking arm arrangement 25 is configured to be supported by the extender plate 22 and at least partly extend in a downward direction towards the base plate 21 via a through-going opening 26 in the extender plate 22. The locking arm arrangement 25 is configured to be mounted to the extender plate 22 and concealed by a cover plate 27 which is configured to be arranged on a top wall 28 of the extender plate 22.

The locking arm arrangement 25 comprises a locking arm 29 which is configured to selectively engage the locking plate 23.

Further, the locking mechanism is configured to be operated by the operating arrangement 30 which comprises an actuator 31 which is configured to allow actuation of the locking arm 29. The actuator 31 is operated by a handle 32 which in turn is pivotable supported by a bracket 33. The actuator arrangement 30 is configured to at least partly be received in a housing 34. The housing 34 is configured to be supported by the extender plate 22.

Additionally, the structure making up the seat assembly 1 comprises two optional guiding arrangements 35. The two guiding arrangements 35 are configured to be arranged symmetrically on opposite sides of the locking arm arrangement 25.

Each guiding arrangement 35 comprises a support 36 configured to be mounted to a lower surface 37 of the extension plate 22. Each support 36 comprises a projecting bar 38 forming a male guiding member 39. The free end of each bar 38 is configured to be arranged to extend through a mating hole 40 in the front wall portion 41 of the base plate 21. The mating holes 27 form female guiding portions 42. Thus, the linear displacement of the extender plate 22 in view of the base plate 21 is facilitated by the two guiding arrangements 35.

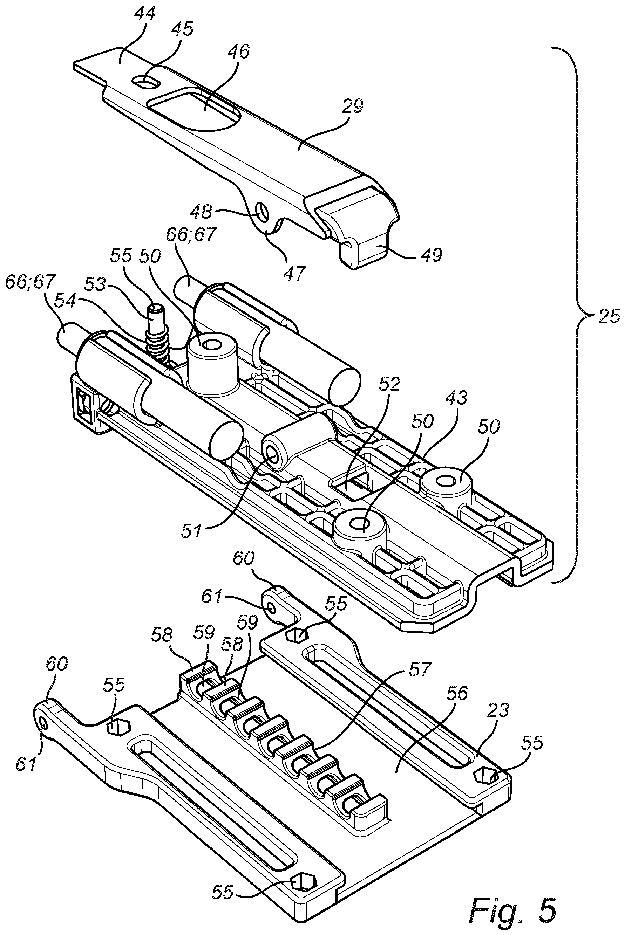

Now turning to Fig. 5, the details of the locking mechanism will be discussed. As given above, the locking mechanism comprises the locking plate 23 and the locking arm arrangement 25. The locking arm arrangement 25 comprises a support plate 43 and the locking arm 29.

Starting with the locking arm 29. The locking arm 29 comprises a longitudinally extending body having a front end and a rear end. The front end comprises an actuator portion 44. Also, the front end comprises a first through-going opening 45 and a second through-going opening 46 to be described below. A mid portion of the locking arm 29 comprises two ears 47 (only one disclosed) extending in parallel with the longitudinal extension of the locking arm 29. Each ear 47 comprises a hole 48 configured to receive a non-disclosed shaft. The rear end of the locking arm 29 comprises a projection 49. The locking arm 29 is configured to be pivotably supported by the support plate 43. The locking arm 29 is pivotable between a locked position and a released position.

The support plate 43 is, as given above, configured to be supported by the lower surface 37 of the extender plate 22. The support plate 43 comprises in its upper surface three screw towers 50 which are configured to receive screws or bolts (not shown) for the mounting of the support plate 43 to the extender plate 22.

The upper surface of the support plate 43 comprises in a mid-portion thereof a bore 51 having an extension transverse to the longitudinal extension of the locking arm 29. The bore 51 is configured to receive a pin (not shown) which is configured to pivotably support the locking arm 29 by the pin extending through the holes 48 in the ears 47 of the locking arm 29 and through the bore 51 in the support plate 43.

The support plate 43 comprises a through-going opening 52. The opening 52 is configured to allow the projection 49 of the locking arm 29 to at least partly extend therethrough when pivoting the locking arm 29 in view of the support plate 43 to thereby lockingly engage a protrusion or a recess in the locking plate 23 which will be discussed below.

A front end of the support plate 43 comprises a pin 53 projecting away from the upper surface of the support plate 43. The pin 53 supports a coaxially arranged biasing member 54 in the form of a coil spring. A free end 55 of the pin 53 is configured to extend through the first through-going opening 45 in the locking arm 29. The biasing member 54 will thereby act against the locking arm 29 and pivot the same towards a locked position.

The locking plate 23 is configured to be mounted to the top wall 24 of the base plate 21, e.g. by bolting or riveting. The disclosed embodiment comprises one bolt-receiving hole 55 in each corner of the locking plate 23. A central portion of a top wall 56 of the locking plate 23 comprises a locking portion 57. The locking portion 57 is in the disclosed embodiment provided as a strip comprising a plurality of protrusions 58 which are arranged one after the other with intermediate recesses 59.

The skilled person realizes that the locking portion 57 may be arranged in a number of ways with remained function. The locking portion 57 may by way of example be provided as a rack which comprises a plurality of teeth arranged one after the other. In yet another example, the locking portion may be provided as a number of holes arranged one after the other.

No matter form or number, each recess 59 or protrusion 58 represents a possible fixed position for the extension plate 22 in view of the base plate 21.

The projection 49 of the locking arm 29 is configured to selectively engage a recess 59 in the locking portion 57 when the locking arm 29 is pivoted to its locked position. The skilled person realizes that the design of the projection 49 determines if a protrusion 58 or a recess 59 is engaged. Also, the skilled person realizes that the shape of the projection 49 should be adapted to the type of locking portion 57 which is used.

The front end of the locking plate 23 comprises two projecting ears 60. The ears 60 are aligned with the longitudinal extension of the locking portion 57. Each ear 60 comprises a hole 61 configured to receive a shaft (not shown) which is configured to pivotably support the bracket 33 which forms part of the actuator arrangement 30 and which will be further described below.

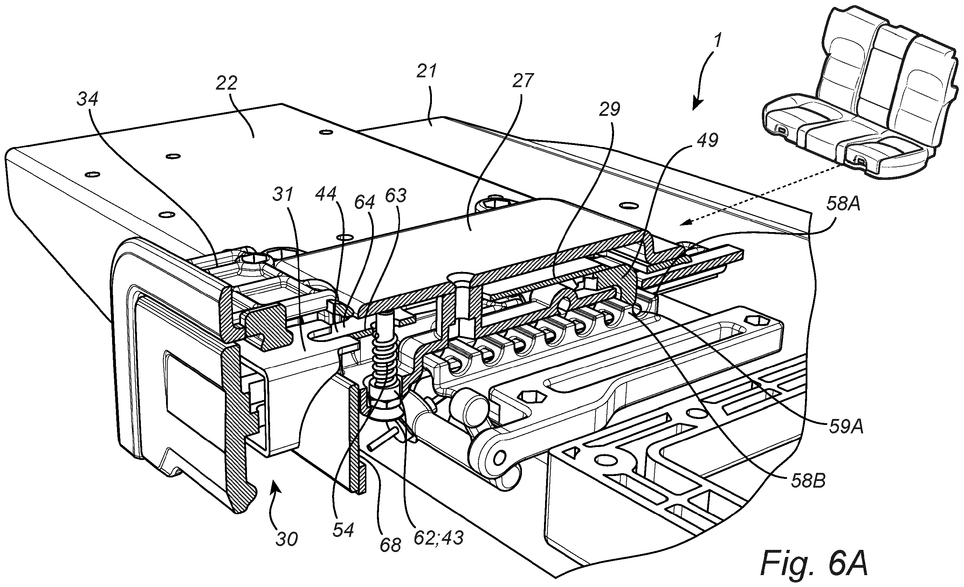

Now turning to Figs. 6A-6D the operation of the seat assembly 1 will be described. Figs. 6A-6D are all disclosing a partial cross section extending along a longitudinal centre line of the locking arm 29.

Starting with Fig. 6A, the seat assembly 1 is in its inner most position, i.e. the extension plate 22 is fully retracted in view of the base plate 21.

In this position, the locking arm 29 is biased by the biasing member 54 towards its locking position in which the projection 49 of the locking arm 29 lockingly resides in a recess 59A which is formed between the last two protrusions 58A, 58B of the locking portion 32. Thereby, any linear displacement of the extender plate 22 in view of the base plate 21 is prevented.

The biasing member 54 acts between a support surface 62 in the support plate 43 and an inner wall portion 63 of the locking arm 29. This is the default position constituting a locked position.

As can also be seen in Fig. 6A is that the actuator 31 of the operating arrangement 30 abuts the actuator portion 44 on the outer wall portion 64 of the locking arm 29.

The cover plate 27 which is arranged on top of the extender plate 22 provides an encapsulation of the locking mechanism which prevents a seat cushion member which will be arranged on top of the extender plate 22 to interfere with the locking mechanism. Also, the housing 34 closes-off the front end of the seat assembly 1 thereby preventing the operator or a seating occupant from sticking his/her fingers into the mechanism. The encapsulation is also illustrated in Fig. 2.

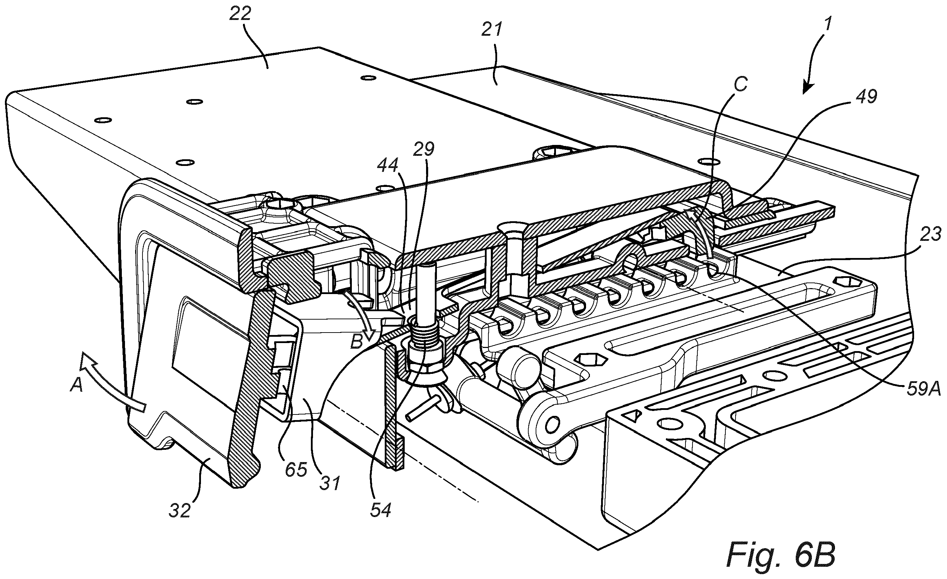

Turning to Fig. 6B, the initiation of the process of extending the seat assembly 1 is illustrated. The extension is made by the operator gripping the handle 32 and pivoting the same clockwise, see arrow A. The handle 32 is pivotably connected to the connector 33 as is best seen in Figs 7A and 7B.

The handle 32 is connected to the actuator 31 via a protrusion 65 which acts as a driver. Thus, a pivoting of the handle 32 will also result in a pivoting of the first actuator 31 by means of the driver 65. The actuator 31 will as a result thereof act on the actuator portion 44 of the locking arm 29, see arrow B. This will cause the locking arm 29 to pivot, thereby compressing the biasing member 54 while the projection 49 in the opposite end of the locking arm 29 will release its engagement with the recess 59A of the locking plate 23, see arrow C. The extender plate 22 is thereby free to be linearly displaced by sliding in view of the base plate 21 to extend the seat assembly 1.

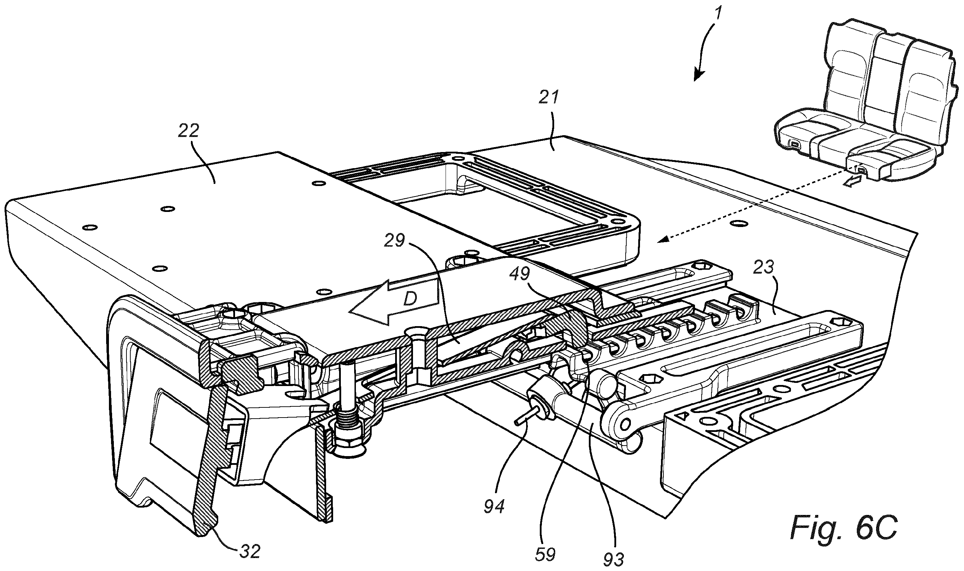

Turning to Fig. 6C, the extender plate 22 is disclosed as being linearly extracted in view of the base plate 21 in order to thereby set the seat assembly 1 to an extended position. The extension is made by pulling the handle 32, see arrow D while at the same time maintaining the pivoted position of the handle 32.

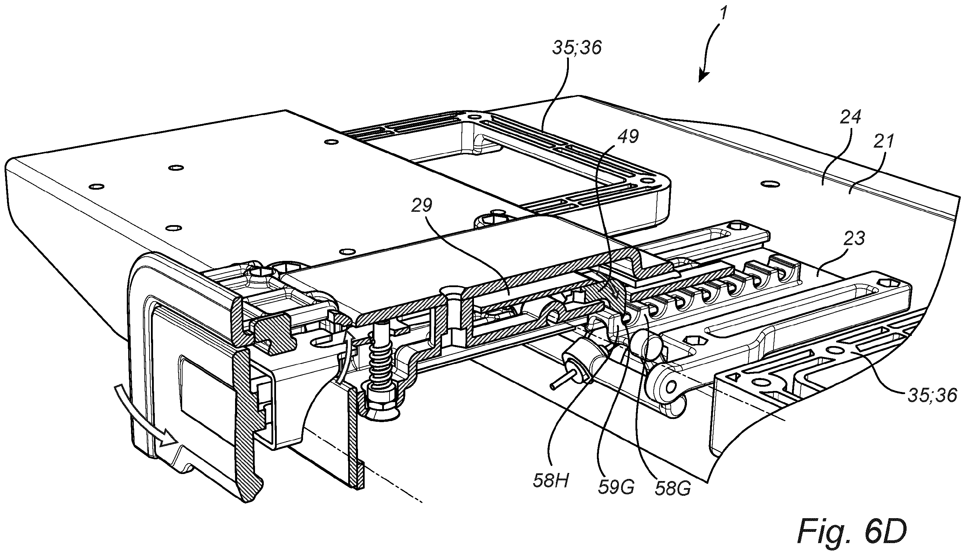

As a safety measure, in the event the grip of the handle 32 should be released or if it should be pivoted counter-clockwise, the locking arm 29, will due to its biasing automatically pivot towards its locked position where the projection 49 anew lockingly engages a recess 59 in the locking plate 23. Thus, although the seat assembly 1 is extendable, it requires an active operation, i.e. application of a pivoting force to the handle 32 to release the locking engagement between the locking arm 29 and the locking plate 23. This is illustrated in Fig. 6D where the seat assembly 1 is fully extracted and the projection 49 of the locking arm 29 lockingly engages the outermost recess 59G between the two projections 58G, 58H in the front end of the locking plate 23.

The skilled person realizes that the number of protrusions 58 and recesses 59 in the locking plate 23 may vary depending on the number of desired locking steps for the seat assembly 1.

As given above and discussed in view of Fig. 4, the seat assembly 1 comprises a guiding arrangement 35. Parts of the guiding arrangement 35 are also shown in Fig. 6D which discloses how the two supports 36 thereof are arranged to the top wall 24 of the base plate 21 and on opposite sides of the locking plate 23. As the extender plate 22 is displaced in view of the base plate 21, the two supports 36 will contribute to a strict linear guiding of the extender plate 22 in view of the base plate 21. The skilled person realizes that the guiding arrangement 35 may be arranged in a number of ways with remained function. As a non-disclosed alternative embodiment, a guiding effect may by way of example be formed by a rail configured to be received in a mating groove.

Now turning to Figs. 7A and 7B, it is schematically disclosed how the operating arrangement 30 is not only used to operate the seat extension structure 20 but also the linkage structure 10.

The handle 32 is pivotably connected to the bracket 33. The bracket 33 comprises opposing ears 85 with a respective through hole 86. The handle 32 is pivotably connected to the bracket 33 by a shaft 87 which extends through the holes 86. Further the bracket 33 comprises two fingers 88. The fingers 88 are configured to interact with pivotable arms 89 to be described below.

The locking plate 23 which is supported by the locking plate comprises two ears 60. Each ear 60 pivotably supports an arm 89. A first free end 90 of the arm 89 constitutes an actuator portion 91. The two arms 89 are interconnected by a shaft 93 that extends between a second end 92 of the respective arm 89. A mid portion of the shaft 93 is connected to a wire 94. The wire 94 is in turn connected to a setting mechanism (not shown) of the linkage structure 10.

By applying a pressure to the handle 32, see arrow A, the fingers 88 of the bracket 33 will act on the actuator portions 91, see arrow B. This will result in a pivoting of the arms 89, see arrow C, whereby the shaft 93 will apply a pulling force to the wire 94 since the second end 92 of the arm 92 which supports the shaft 93 will pivot towards the handle 32, see arrow D. This pulling force is in turn used by the setting mechanism (not shown) of the linkage structure 10 to erect the linkage structure 10 into a quadrangular configuration having an elevated upper support member 18.

The handle 32 is biased to automatically return to its initial position when the handle 32 is released. This applies no matter if the handle 32 is pushed or pivoted. The biasing is provided for by a set of biasing members 66 which are arranged on the support plate 43, see Fig. 5 and Figs 7A and 7D. A free end 67 of each biasing members 66 is configured to act against a rear wall portion of the bracket 33.

Accordingly, the operating arrangement 30 is a common operating arrangement that is configured to selectively allow operation of the linkage structure 10 and the seat extension structure 20. Thus, the operating arrangement has a dual function of both hight adjustment and length adjustment.

It is realized by a person skilled in the art that features from various embodiments disclosed herein may be combined with one another to provide further alternative embodiments.

By way of example, the skilled person realizes that the base plate of the extension structure may form the upper support member of the linkage structure.

## Claims

1. A seat assembly (1) configured to be integrated into a vehicle seat (2), the seat assembly (1) comprising:
a seat portion (8);
a linkage structure (10) configured to allow the seat portion (8) to be movable between a first elevation in which the seat portion (8) is adapted for an adult, and a second elevation in which the seat portion (8) is adapted for a child; and
a seat extension structure (20), the seat extension structure being configured to allow the seat portion (8) to be linearly movable between a retracted position in which the seat portion (8) is adapted for an occupant of a first size, and an extended position, in which the seat portion (8) is adapted for an occupant of a second size, said first size being smaller than the second size, **characterized in that**
the seat assembly (1) further comprises a common operating arrangement (30) configured to selectively allow operation of the linkage structure (10) and the seat extension structure (20) respectively.

2. The seat assembly according to claim 1, wherein the common operating arrangement (30) comprises a handle (32) and an actuator (31) configured to actuate the linear movement of the seat portion (8) between the retracted and extended position, and to actuate the seat portion (8) to be movable between the first elevation and the second elevation, and wherein the actuator (31) is configured to be selectively operated by pivoting and pulling the handle (32) or by pushing the handle (32).

3. The seat assembly according to claim 1, wherein the common operating arrangement (30) comprises a handle (32) and an actuator (31) configured to actuate the linear movement of the seat portion (8) between the retracted and extended position, and to actuate the seat portion (8) to be movable between the first elevation and the second elevation, and wherein the actuator (31) is configured to be selectively operated by pulling the handle (32) or by pushing the handle (32).

4. The seat assembly according to any of the preceding claims,
wherein the seat extension structure (20) comprises a base plate (21) and an extender plate (22), the extender plate (22) being linearly displaceable in view of the base plate (21) to thereby move the seat portion (8) between the retracted position and the extended position.

5. The seat assembly according to claim 4, wherein the base plate (21) is fixedly supported by an upper support member (18) of the linkage structure (10).

6. The seat assembly according to claim 4, further comprising a locking mechanism for holding the extender plate (22) in said extended position, said locking mechanism comprising a locking arm (29) being pivotably supported and wherein the locking arm (29) is configured to pivot between a locking position and a released position, in which locking position the extender plate (22) is locked in view of the base plate (21), and in which released position the extender plate (22) is slidable in view of the base plate (21).

7. The seat assembly according to claim 6, wherein the locking arm (29) comprises an actuator portion (44), and wherein the actuator (31) is configured to operate the actuator portion (44) of the locking arm (29) by pivoting the handle (32) to thereby pivot the locking arm (29) between the locked position and the released position.

8. The seat assembly according to any of claims 6-7, wherein the locking arm (29) is biased by a biasing member (54) towards its locked position.

9. The seat assembly according to any of claims 6-8, wherein the locking arm (29) is supported by the extender plate (22).

10. The seat assembly according to any of claims 6-9, wherein the locking arm (29) comprises a projection (49) configured to selectively engage a locking portion (57) supported by the base plate (21).

11. The seat assembly according to any of the preceding claims, further comprising a guiding arrangement (35), said guiding arrangement comprising at least one male guiding member (39) and at least one female guiding portion (42) configured to slidingly receive the male guiding member (39).

12. Use of the seat assembly according to any of claims 1-11 in a vehicle seat.

## Patentansprüche

1. Sitzbaugruppe (1), die konfiguriert ist, um in einen Fahrzeugsitz (2) integriert zu werden, die Sitzbaugruppe (1) umfassend:
einen Sitzabschnitt (8);
eine Verbindungsstruktur (10), die konfiguriert ist, um dem Sitzabschnitt (8) zu ermöglichen, zwischen einer ersten Höhe, in der der Sitzabschnitt (8) für einen Erwachsenen angepasst ist, und einer zweiten Höhe, in der der Sitzabschnitt (8) für ein Kind angepasst ist, bewegbar zu sein; und
eine Sitzverlängerungsstruktur (20), wobei die Sitzverlängerungsstruktur konfiguriert ist, um dem Sitzabschnitt (8) zu ermöglichen, zwischen einer eingefahrenen Position, in der der Sitzabschnitt (8) für einen Insassen einer ersten Größe angepasst ist, und einer verlängerten Position, in der der Sitzabschnitt (8) für einen Insassen einer zweiten Größe angepasst ist, linear bewegbar zu sein, wobei die erste Größe kleiner als die zweite Größe ist,
**dadurch gekennzeichnet, dass**
die Sitzbaugruppe (1) ferner eine gemeinsame Betriebsanordnung (30) umfasst, die konfiguriert ist, um wahlweise einen Betrieb der Verbindungsstruktur (10) und der Sitzverlängerungsstruktur (20) zu ermöglichen.

2. Sitzbaugruppe nach Anspruch 1, wobei die gemeinsame Betriebsanordnung (30) einen Griff (32) und ein Betätigungselement (31) umfasst, das konfiguriert ist, um die lineare Bewegung des Sitzabschnitts (8) zwischen der eingefahrenen und der verlängerten Position zu betätigen und um den Sitzabschnitt (8) zu betätigen, um zwischen der ersten Höhe und der zweiten Höhe bewegbar zu sein und wobei das Betätigungselement (31) konfiguriert ist, um durch Schwenken und Ziehen des Griffs (32) oder durch Drücken des Griffs (32) selektiv betrieben zu werden.

3. Sitzbaugruppe nach Anspruch 1, wobei die gemeinsame Betriebsanordnung (30) einen Griff (32) und ein Betätigungselement (31) umfasst, das konfiguriert ist, um die lineare Bewegung des Sitzabschnitts (8) zwischen der eingefahrenen und der verlängerten Position zu betätigen und um den Sitzabschnitt (8) zu betätigen, um zwischen der ersten Höhe und der zweiten Höhe bewegbar zu sein und wobei das Betätigungselement (31) konfiguriert ist, um durch Ziehen des Griffs (32) oder durch Drücken des Griffs (32) selektiv betrieben zu werden.

4. Sitzbaugruppe nach einem der vorstehenden Ansprüche, wobei die Sitzverlängerungsstruktur (20) eine Grundplatte (21) und eine Verlängerungsplatte (22) umfasst, wobei die Verlängerungsplatte (22) angesichts der Grundplatte (21) linear verschiebbar ist, um dadurch den Sitzabschnitt (8) zwischen der eingefahrenen Position und der verlängerten Position zu bewegen.

5. Sitzbaugruppe nach Anspruch 4, wobei die Grundplatte (21) durch ein oberes Stützelement (18) der Verbindungsstruktur (10) fest gestützt wird.

6. Sitzbaugruppe nach Anspruch 4, ferner umfassend einen Verriegelungsmechanismus zum Halten der Verlängerungsplatte (22) in der verlängerten Position, der Verriegelungsmechanismus umfassend einen Verriegelungsarm (29), der schwenkbar gestützt ist und wobei der Verriegelungsarm (29) konfiguriert ist, um zwischen einer Verriegelungsposition und einer gelösten Position zu schwenken, wobei in der Verriegelungsposition die Verlängerungsplatte (22) angesichts der Grundplatte (21) verriegelt ist und in der gelösten Position die Verlängerungsplatte (22) angesichts der Grundplatte (21) gleitbar ist.

7. Sitzbaugruppe nach Anspruch 6, wobei der Verriegelungsarm (29) einen Betätigungsabschnitt (44) umfasst und wobei das Betätigungselement (31) konfiguriert ist, um den Betätigungsabschnitt (44) des Verriegelungsarms (29) durch Schwenken des Griffs (32) zu betreiben, um dadurch den Verriegelungsarm (29) zwischen der verriegelten Position und der gelösten Position zu schwenken.

8. Sitzbaugruppe nach einem der Ansprüche 6 bis 7, wobei der Verriegelungsarm (29) durch ein Vorspannelement (54) zu seiner verriegelten Position hin vorgespannt ist.

9. Sitzbaugruppe nach einem der Ansprüche 6 bis 8, wobei der Verriegelungsarm (29) durch die Verlängerungsplatte (22) gestützt wird.

10. Sitzbaugruppe nach einem der Ansprüche 6 bis 9, wobei der Verriegelungsarm (29) einen Vorsprung (49) umfasst, der konfiguriert ist, um in einen Verriegelungsabschnitt (57), der durch die Grundplatte (21) gestützt wird, selektiv einzugreifen.

11. Sitzbaugruppe nach einem der vorstehenden Ansprüche, ferner umfassend eine Führungsanordnung (35), die Führungsanordnung umfassend mindestens ein männliches Führungselement (39) und mindestens einen weiblichen Führungsabschnitt (42), der konfiguriert ist, um das männliche Führungselement (39) gleitend aufzunehmen.

12. Verwendung der Sitzbaugruppe nach einem der Ansprüche 1 bis 11 in einem Fahrzeugsitz.

## Revendications

1. Ensemble de siège (1) conçu pour être intégré dans un siège de véhicule (2), l'ensemble de siège (1) comprenant :
une partie de siège (8) ;
une structure de liaison (10) conçue pour permettre à la partie de siège (8) d'être mobile entre une première élévation dans laquelle la partie de siège (8) est prévue pour un adulte, et une seconde élévation dans laquelle la partie de siège (8) est prévue pour un enfant ; et
une structure d'extension de siège (20), la structure d'extension de siège étant conçue pour permettre à la partie de siège (8) d'être mobile linéairement entre une position rétractée dans laquelle la partie de siège (8) est prévue pour un occupant d'une première taille, et une position en extension, dans laquelle la partie de siège (8) est prévue pour un occupant d'une seconde taille, ladite première taille étant plus petite que la seconde taille, **caractérisé en ce que**
l'ensemble de siège (1) comprend en outre un agencement de fonctionnement commun (30) conçu pour permettre sélectivement le fonctionnement de la structure de liaison (10) et de la structure d'extension de siège (20) respectivement.

2. Ensemble de siège selon la revendication 1, dans lequel l'agencement de fonctionnement commun (30) comprend une poignée (32) et un actionneur (31) conçu pour actionner le mouvement linéaire de la partie de siège (8) entre la position rétractée et en extension, et pour actionner la partie de siège (8) pour être mobile entre la première élévation et la seconde élévation, et dans lequel l'actionneur (31) est conçu pour être mis en fonctionnement sélectivement en pivotant et tirant la poignée (32) ou en poussant la poignée (32).

3. Ensemble de siège selon la revendication 1, dans lequel l'agencement de fonctionnement commun (30) comprend une poignée (32) et un actionneur (31) conçu pour actionner le mouvement linéaire de la partie de siège (8) entre la position rétractée et en extension, et pour actionner la partie de siège (8) pour être mobile entre la première élévation et la seconde élévation, et dans lequel l'actionneur (31) est conçu pour être mis en fonctionnement sélectivement en tirant la poignée (32) ou en poussant la poignée (32).

4. Ensemble de siège selon l'une quelconque des revendications précédentes, dans lequel la structure d'extension de siège (20) comprend une plaque de base (21) et une plaque d'extension (22), la plaque d'extension (22) étant déplaçable linéairement à la lumière de la plaque de base (21) pour mettre en mouvement de ce fait la partie de siège (8) entre la position rétractée et la position en extension.

5. Ensemble de siège selon la revendication 4, dans lequel la plaque de base (21) est supportée de manière fixe par un élément de support supérieur (18) de la structure de liaison (10).

6. Ensemble de siège selon la revendication 4, comprenant en outre un mécanisme de verrouillage pour maintenir la plaque d'extension (22) dans ladite position en extension, ledit mécanisme de verrouillage comprenant un bras de verrouillage (29) supporté de manière pivotante et dans lequel le bras de verrouillage (29) est conçu pour pivoter entre une position de verrouillage et une position libérée, dans laquelle position de verrouillage la plaque d'extension (22) est verrouillée à la lumière de la plaque de base (21), et dans laquelle position libérée la plaque d'extension (22) est coulissable à la lumière de la plaque de base (21).

7. Ensemble de siège selon la revendication 6, dans lequel le bras de verrouillage (29) comprend une partie d'actionneur (44), et dans lequel l'actionneur (31) est conçu pour mettre en fonctionnement la partie d'actionneur (44) du bras de verrouillage (29) en faisant pivoter la poignée (32) pour faire pivoter de ce fait le bras de verrouillage (29) entre la position verrouillée et la position libérée.

8. Ensemble de siège selon l'une quelconque des revendications 6 à 7, dans lequel le bras de verrouillage (29) est sollicité par un élément de sollicitation (54) vers sa position verrouillée.

9. Ensemble de siège selon l'une quelconque des revendications 6 à 8, dans lequel le bras de verrouillage (29) est supporté par la plaque d'extension (22).

10. Ensemble de siège selon l'une quelconque des revendications 6 à 9, dans lequel le bras de verrouillage (29) comprend une saillie (49) conçue pour venir en prise sélectivement avec une partie de verrouillage (57) supportée par la plaque de base (21).

11. Ensemble de siège selon l'une quelconque des revendications précédentes, comprenant en outre un agencement de guidage (35), ledit agencement de guidage comprenant au moins un élément de guidage mâle (39) et au moins une partie de guidage femelle (42) conçue pour recevoir de manière coulissante l'élément de guidage mâle (39).

12. Utilisation de l'ensemble de siège selon l'une quelconque des revendications 1 à 11 dans un siège de véhicule.
